# EUROPEAN PATENT APPLICATION

(11) **EP 4 265 649 A1**
(43) Date of publication of application: **25.10.2023**
(21) Application number: 21906421.9
(22) Date of filing: 06.12.2021
(51) Int. Cl.: C08F 14/00, C08F 4/00

(54) **RADICAL POLYMERIZATION METHOD, AND METHOD FOR PRODUCING RADICAL-POLYMERIZED FLUORINE-BASED POLYMER**

(30) Priority: 18.12.2020 JP 2020210359
(71) Applicant: Mitsubishi Materials Electronic Chemicals Co., Ltd., Akita-shi Akita 010-8585 (JP)
(72) Inventor: ONO Taizo, Akita-shi, Akita 010-8585 (JP); KAMIYA Takeshi, Akita-shi, Akita 010-8585 (JP); ABE Tomoya, Akita-shi, Akita 010-8585 (JP)
(74) Representative: Hoffmann Eitle
(86) International application number: PCT/JP2021/044778
(87) International publication number: WO 2022/131058

(57) **Abstract**

Provided are a radical polymerization method in which, using a radical polymerization initiator with a low concentration of 1 mmol/L or less, a radical-polymerizable fluorine-based monomer can be radical-polymerized under a low temperature environment of a room temperature range without the need for an emulsifier such as PFOA; and a method for producing a radical-polymerized fluorine-based polymer using the radical polymerization method. The radical polymerization method is a radical polymerization method of radical-polymerizing a radical-polymerizable fluorine-based monomer using a polymerization initiator which generates perfluoroalkyl radicals by thermal decomposition, in which the polymerization initiator includes at least one of perfluoro-3-ethyl-2,2,4-trimethyl-3-pentyl or perfluoro-2,2,4-trimethyl-3-isopropyl-3-pentyl .

## Description

### TECHNICAL FIELD

The present invention relates to a radical polymerization method of radical-polymerizing a radical-polymerizable fluorine-based monomer, and a method for producing a radical-polymerized fluorine-based polymer using the radical polymerization method.

Priority is claimed on Japanese Patent Application No. 2020-210359, filed December 18, 2020, the content of which is incorporated herein by reference.

### BACKGROUND ART

Radical-polymerized fluorine-based polymers such as perfluoropolymers are polymers including fluorine, oxygen, and carbon without hydrogen or chlorine in the molecule. As typical radical-polymerized fluorine-based polymers, polytetrafluoroethylene (PTFE), perfluoroalkoxyalkane (PFA), tetrafluoroethylene hexafluoropropylene copolymer (FEP), and the like are exemplary examples. The perfluoropolymer has been widely used in coating materials and the like, taking advantage of many features such as heat resistance, chemical resistance, low friction, and non-adhesiveness.

In the related art, in a case of producing the perfluoropolymer from a perfluoromonomer as an example of a radical-polymerizable fluorine-based monomer, an emulsion polymerization method is generally carried out. In a case where the perfluoropolymer is produced by the emulsion polymerization method, a fluorine-containing emulsifier is generally used because the fluorine-containing emulsifier does not hinder the polymerization reaction of fluorine-containing monomers by chain transfer in an aqueous medium.

As the fluorine-containing emulsifier, for example, perfluorooctanoic acid (PFOA) is an exemplary example. In a case where the perfluoropolymer is synthesized using PFOA, the PFOA adhering to the obtained perfluoropolymer is removed by washing with water, resulting in the production of the waste water containing the PFOA.

The PFOA has a high C-F bond energy and is excellent in light resistance and heat resistance. However, since the PFOA biodegrades very slowly, there are concerns about environmental pollution caused by the waste water containing the PFOA, and its use is regulated.

In addition, since a terminal carboxyl group derived from persulfate such as ammonium persulfate, which is used in an aqueous reaction such as emulsion polymerization, remains, a step of removing such terminal group is also required, which complicates the production process.

Therefore, a polymerization method which does not use the fluorine-containing emulsifier is desired in the polymerization of perfluoromonomers. For example, Patent Document 1 discloses, as an emulsifier-free radical initiator, perfluoro-3-ethyl-2,4-dimethyl-3-pentyl (hereinafter, referred to as PPFR1) and perfluoro-2,4-dimethyl-3-isopropyl-3-pentyl (hereinafter, referred to as PPFR2). In addition, Non-Patent Document 1 discloses a polymerization method of the perfluoropolymer using such PPFR1 or PPFR2.

### CITATION LIST

### Patent Document

[Patent Document 1]
Japanese Unexamined Patent Application, First Publication No. S60-64935

### Non-Patent Document

[Non-Patent Document 1]
Boschet, F.; Ono, T.; Ameduri, B., Novel Source of Trifluoromethyl Radical As Efficient. Initiator for the Polymerization of Vinylidene Fluoride. Macromolecular Rapid Communications, 2012. 33(4): p. 302-308.

### SUMMARY OF INVENTION

### Technical Problem

The polymerization reaction of perfluoromonomers is an exothermic reaction, and in order to appropriately control the polymerization reaction, it is preferable to carry out the polymerization at a low concentration of the polymerization initiator and at a temperature in a room temperature range (for example, 10°C to 30°C).

However, in the radical polymerization using PPFR1 or PPFR2 as a polymerization initiator, disclosed in Patent Document 1 or Non-Patent Document 1, for example, at a low concentration of 1 mmol/L, the polymerization reaction hardly progresses at a temperature in the room temperature range.

For example, in a case where the radical-polymerizable fluorine-based monomer is radical-polymerized at the room temperature range using PPFR1 or PPFR2 which has been known in the related art as a radical polymerization initiator, the polymerization reaction does not progress unless the concentration of PPFR1 or PPFR2 is as high as 0.4 mol/L to 2.6 mol/L. At such a high concentration, for example, 200 kg or more of PPFR1 or PPFR2 is required to produce 1 ton of PTFE, and there is a problem that it is difficult to stably control the polymerization reaction of tetrafluoroethylene (TFE), which is an exothermic reaction.

The present invention has been made in view of the circumstances described above, and an object of the present invention is to provide a radical polymerization method in which, using a radical polymerization initiator with a low concentration of 1 mmol/L or less, a radical-polymerizable fluorine-based monomer can be radical-polymerized under a relatively low temperature environment of a room temperature range without the need for an emulsifier such as PFOA; and provide a method for producing a radical-polymerized fluorine-based polymer using the radical polymerization method.

### Solution to Problem

The inventor of the present application has found new knowledge that, in a case where a polymerization reaction of TFE is carried out at a room temperature range using, as a radical polymerization initiator, perfluoro-3-ethyl-2,2,4-trimethyl-3-pentyl (hereinafter, referred to as PPFR3) or perfluoro-2,2,4-trimethyl-3-isopropyl-3-pentyl (hereinafter, referred to as PPFR4), the polymerization reaction progresses even at a low concentration of 0.0004 mol/L. In a case where the knowledge is used repeatedly at the actual production level, it is assumed that PPFR3 or PPFR4 required to produce 1 ton of PTFE is 100 g or less or on the order of approximately 100 g, and a radical polymerization method, in which PPFR3 or PPFR4 is used as a polymerization initiator capable of carrying out the polymerization reaction of TFE at a concentration which allows the polymerization reaction to be stabilized and controlled even in the room temperature range, has been found.

That is, in order to achieve the above-described object, the radical polymerization method according to an aspect of the present invention is a radical polymerization method of subjecting a radical-polymerizable fluorine-based monomer to a radical polymerization using a polymerization initiator which generates perfluoroalkyl radicals by thermal decomposition, to obtain a radical-polymerized fluorine-based polymer, in which the polymerization initiator includes at least one of perfluoro-3-ethyl-2,2,4-trimethyl-3-pentyl or perfluoro-2,2,4-trimethyl-3-isopropyl-3-pentyl.

In addition, in the present invention, the above-described radical-polymerizable fluorine-based monomer may be a fluorine-based monomer or a perfluoromonomer.

As a result, environmental pollution problems caused by an emulsion polymerization method using PFOA or alternative emulsifier can be avoided.

In addition, in the present invention, the above-described polymerization initiator may be used by dissolving the radical-polymerizable fluorine-based monomer in a polymerization solvent.

In addition, in the present invention, the above-described radical polymerization may be carried out by copolymerizing two or more kinds of radical-polymerizable fluorine-based monomers having structures different from each other.

In addition, in the present invention, the above-described radical polymerization may be carried out in a temperature range of 10°C or higher and lower than 90°C.

The method for producing a radical-polymerized fluorine-based polymer according to an aspect of the present invention is a method for producing a radical-polymerized fluorine-based polymer using the radical polymerization method described in each of the above-described aspects, the method including a reaction solution-forming step of dissolving the polymerization initiator in a polymerization solvent to obtain a reaction solution and a radical polymerization step of supplying the radical-polymerizable fluorine-based monomer to the reaction solution to obtain a radical-polymerized fluorine-based polymer.

In addition, in the present invention, the above-described radical-polymerizable fluorine-based monomer may be a perfluoromonomer, and the above-described radical-polymerized fluorine-based polymer may be a perfluoropolymer.

In addition, in the present invention, a terminal group of the above-described perfluoropolymer may be a trifluoromethyl group.

In addition, in the present invention, the above-described perfluoromonomer may be tetrafluoroethylene, and the above-described perfluoropolymer may be polytetrafluoroethylene.

In addition, in the present invention, the above-described radical polymerization step may be carried out in a temperature range of 10°C or higher and 50°C or lower.

In addition, in the present invention, a molar concentration ratio of the above-described polymerization initiator and the above-described radical-polymerizable fluorine-based monomer in the above-described radical polymerization step may be in a range of 1:10 to 1:10⁸.

In addition, in the present invention, a concentration of the above-described polymerization initiator contained in the above-described reaction solution may be in a range of 0.00001 mol/L or more and 1 mol/L or less.

In addition, in the present invention, the above-described radical polymerization step may be repeated, and after completing one radical polymerization step, a residual solution containing unreacted perfluoroalkyl radicals may be used in a next radical polymerization step.

### Advantageous Effects of Invention

According to the present invention, it is possible to provide a radical polymerization method in which, using a radical polymerization initiator with a low concentration of 1 mmol/L or less, a radical-polymerizable fluorine-based monomer can be radical-polymerized under a low temperature environment of a room temperature range; and provide a method for producing a radical-polymerized fluorine-based polymer using the radical polymerization method.

### BRIEF DESCRIPTION OF DRAWINGS

FIG. 1 is a graph showing an analysis result of Example 1 using ATR-FTIR.
FIG. 2A is a graph showing an analysis result of Example 1 using TG-DTA.
FIG. 2B is a graph showing an analysis result of Example 1 using TG-DTA.
FIG. 3 is a graph showing an analysis result of Example 2 using ATR-FTIR.
FIG. 4A is a graph showing an analysis result of Example 2 using TG-DTA.
FIG. 4B is a graph showing an analysis result of Example 2 using TG-DTA.
FIG. 5 is a graph showing an analysis result of Example 3 using ATR-FTIR.
FIG. 6A is a graph showing an analysis result of Example 3 using TG-DTA.
FIG. 6B is a graph showing an analysis result of Example 3 using TG-DTA.
FIG. 7 is a graph showing an analysis result of Example 4 using ATR-FTIR.
FIG. 8A is a graph showing an analysis result of Example 4 using TG-DTA.
FIG. 8B is a graph showing an analysis result of Example 4 using TG-DTA.
FIG. 9 is a graph summarizing and showing a relationship between a concentration of PPFR4 of Examples 1 to 4 and a phase transition temperature in DTA of PTFE to be obtained by polymerization.
FIG. 10 is a graph showing a relationship between the concentration of PPFR4 of Examples 1 to 4 and heat resistance in comparison from a behavior of TG.
FIG. 11 is a graph showing an analysis result of Example 5 using ATR-FTIR.
FIG. 12A is a graph showing an analysis result of Example 5 using TG-DTA.
FIG. 12B is a graph showing an analysis result of Example 5 using TG-DTA.
FIG. 13 is a graph showing an analysis result of Example 6 using ATR-FTIR.
FIG. 14A is a graph showing an analysis result of Example 6 using TG-DTA.
FIG. 14B is a graph showing an analysis result of Example 6 using TG-DTA.
FIG. 15 is a graph showing an analysis result of Example 7 using ATR-FTIR.
FIG. 16A is a graph showing an analysis result of Example 7 using TG-DTA.
FIG. 16B is a graph showing an analysis result of Example 7 using TG-DTA.
FIG. 17 is a graph showing an analysis result of Example 8 using ATR-FTIR.
FIG. 18 is a graph showing an analysis result of Example 8 using TG-DTA.
FIG. 19 is a graph comparing decomposition temperatures in DTA of Example 8 and Example 3.

### DESCRIPTION OF EMBODIMENTS

Hereinafter, a radical polymerization method and a method for producing a radical-polymerized fluorine-based polymer, which are embodiments of the present invention, will be described with reference to the drawings. The embodiments shown below are specifically described for better understanding of the gist of the invention, and do not limit the present invention unless otherwise specified.

In a case of producing a radical-polymerized fluorine-based polymer by the radical polymerization method according to the embodiment of the present invention, a polymerization initiator is dissolved in a polymerization solvent to obtain a reaction solution (reaction solution-forming step). Thereafter, the reaction solution is supplied to a radical-polymerizable fluorine-based monomer to generate perfluoroalkyl radicals by thermal decomposition of the polymerization initiator, thereby obtaining a radical-polymerized fluorine-based polymer (radical polymerization step).

The radical polymerization initiator which generates perfluoroalkyl radicals by the thermal decomposition, which is used in the embodiment of the present invention, includes at least one of perfluoro-3-ethyl-2,2,4-trimethyl-3-pentyl (PPFR3) or perfluoro-2,2,4-trimethyl-3-isopropyl-3-pentyl (PPFR4).

PPFR3 and PPFR4 can be synthesized by fluorinating perfluoroalkenes, which have highly branched structures and are highly shielded, with fluorine radicals. Here, the perfluoroalkenes highly shielded due to highly branched structures are perfluoroalkenes having branched structures such as perfluoro-4,4-dimethyl-3-isopropyl-2-pentene or perfluoro-2,4,4-trimethyl-3-isopropyl-2-pentene.

Unlike PPFR1 or PPFR2 which has been used as a radical polymerization initiator in the related art, PPFR3 and PPFR4 are not very stable (extremely stable perfluoroalkyl radicals) that hardly decompose in the room temperature range, but decompose at a considerable rate even in the room temperature range. Therefore, based on the fact that thermal decomposition characteristics are significantly different from those of known extremely stable perfluoroalkyl radicals, PPFR3 and PPFR4 are called easily decomposable stable perfluoroalkyl radicals, which are clearly distinguished from the extremely stable perfluoroalkyl radicals in the related art.

PPFR3 and PPFR4 are decomposed through thermal decomposition processes shown in Formulae 1 and 2, respectively, thereby generating a trifluoromethyl radical.

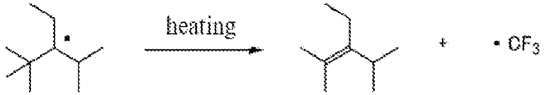

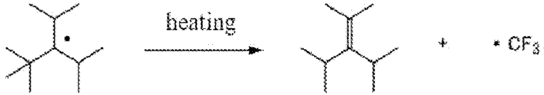

From analyses of decomposition products, the thermal decomposition processes of PPFR3 and PPFR4 are only through β-elimination routes of the trifluoromethyl group, which constitutes a sterically most dense perfluoro-tertiary-butyl group. For example, any of three trifluoromethyl groups which constitutes the perfluoro-tertiary-butyl group as shown in Formula 3 undergo β-elimination and decomposition. This indicates that PPFR3 and PPFR4 are clean trifluoromethyl radical generators containing no active species other than trifluoromethyl radicals.

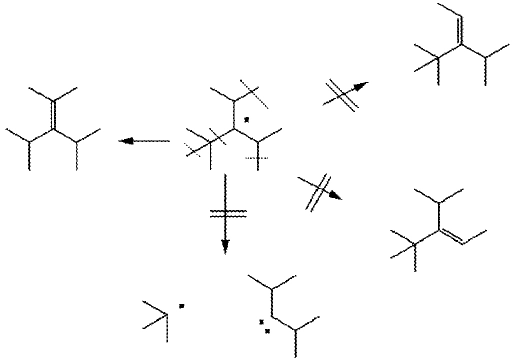

In the embodiment of the present invention, the radical-polymerizable fluorine-based monomer polymerized by PPFR3 or PPFR4 means a radical-polymerizable monomer having a fluorine atom in the molecule. The radical-polymerizable monomer has a cyclic or chain structure, and may contain oxygen through an ether bond with the chain or the ring. Specifically, for example, perfluoromonomers composed only of fluorine, oxygen, and carbon, polyfluoromonomers in which a part of fluorines constituting the perfluoromonomer is substituted with another element, and the like are exemplary examples. As specific examples of these perfluoromonomers and polyfluoromonomers, tetrafluoroethylene (TFE), vinyl fluoride, vinylidene fluoride, trifluoroethylene, chlorotrifluoroethylene (CTFE), 1,2-difluoroethylene, hexafluoropropylene (HFP); perfluoro(alkyl vinyl ether) such as perfluoro(methyl vinyl ether) (PMVE), perfluoro(ethyl vinyl ether) (PEVE), and perfluoro(propyl vinyl ether) (PPVE), CF₂=CFOCF₂CF(CF₃)OCF₂CF₂X (here, X is SO₂F, CO₂H, CO₂CH₃, CH₂OH, CH₂OCN, CF₂=CFOCF₂CF₂SO₂F, F, or (CF₂)ₙCH₂OCF=CF₂, in which n is 1, 2, 3, 4 or 5), R₄CH₂OCF=CF₂ (here, R₄ is hydrogen or F(CF₂)ₘ-, in which m is 1, 2, or 3), and R₅OCF=CH₂ (here, R₅ is F(CF₂)_{z}-, in which z is 1, 2, 3, or 4); perfluorobutylethylene (PFBE), 3,3,3-trifluoropropene, and 2-trifluoromethyl-3,3,3-trifluoro-1-propene; CF₂=CFCO₂R₆ (here, R₆ is an alkyl group having 1 to 6 carbon atoms, which may be branched); CF₂=C(CF₃)CO₂R₇ (here, R₇ is an alkyl group having 1 to 6 carbon atoms, which may be branched, or an adamantyl group which may be substituted at the bridgehead position with a methyl or hydroxy group; and the like are exemplary examples. As the cyclic monomer, perfluoro(2-methylene-1,3-dioxolane), perfluoro(2-methylene-4,5-dimethyl-1,3-dioxolane), perfluoro(1,3-dioxole), perfluoro(2,2-dimethyl-1,3-dioxole) (PDD), and the like are exemplary examples.

As specific examples of the radical-polymerized fluorine-based polymer produced by the radical polymerization method according to the embodiment of the present invention, polytetrafluoroethylene (PTFE), polyvinylidene fluoride (PVDF), polychlorotrifluoroethylene (PCTFE), polyperfluoro(2,2-dimethyl-1,3-dioxole), polyperfluoro(2-methylene-4,5-dimethyl-1,3-dioxolane), polyperfluoro(2-methylene-1,3-dioxolane), polyperfluoro(4-vinyloxy-1-butene), polyacrylic acid 3,3,4,4,5,5,6,6,6-nonafluorohexyl, polyacrylic acid 3,3,4,4,5,5,6,6,7,7,8,8,8-tridecafluorooctyl, polymethacrylic acid 3,3,4,4,5,5,6,6,6-nonafluorohexyl, polymethacrylic acid 3,3,4,4,5,5,6,6,7,7,8,8,8-tridecafluorooctyl, poly α-chloroacrylic acid 3,3,4,4,5,5,6,6,6-nonafluorohexyl, and the like are exemplary examples.

In addition, as specific examples of a radical-copolymerized fluorine-based polymer obtained by copolymerizing two or more kinds of radical-polymerizable fluorine-based monomers having structures different from each other, tetrafluoroethylene-hexafluoropropylene copolymer (FEP), tetrafluoroethylene-perfluoroalkoxyethylene copolymer (PFA), tetrafluoroethylene-chlorotrifluoroethylene copolymer, tetrafluoroethylene-vinylidene fluoride copolymer, tetrafluoroethylene-perfluoro(2,2-dimethyl-1,3-dioxole) copolymer, tetrafluoroethylene-hexafluoropropylene-vinylidene fluoride copolymer, tetrafluoroethylene-hexafluoropropylene-perfluoro(2,2-dimethyl-1,3-dioxole) copolymer (Teflon (registered trademark) AF), and the like are exemplary examples.

As the polymerization solvent used in the radical polymerization step, a fluorous solvent can be used. The fluorous solvent is a highly fluorinated (for example, perfluorinated) hydrocarbon, is immiscible with water at normal temperature and forms a two-layer system, and is good solvent for fluorine-containing compounds. As the fluorous solvent, for example, perfluorohexane, perfluoroheptane, perfluoropentane, and the like can be exemplary examples. In the embodiment of the present invention, perfluorohexane is used as the polymerization solvent.

In the radical polymerization step, in addition to a case of polymerizing one kind of the radical-polymerizable fluorine-based monomer, a radical-copolymerized polymer can be obtained by copolymerizing two or more kinds of radical-polymerizable fluorine-based monomers having structures different from each other.

The radical polymerization may be carried out in a temperature range of 10°C or higher and lower than 90°C, and is carried out preferably in a temperature range of 10°C or higher and 50°C or lower, and more preferably in the room temperature range (10°C or higher and 30°C or lower). In a case of being lower than 10°C, there is a concern that the required amount of the radical polymerization initiator increases and the production cost increases. In addition, in a case of 90°C or higher, there is a restriction on solvent selection, such as the need for a pressurized container due to the use of a low-boiling-point solvent which is easy to recover and remove, such as perfluorohexane. In addition, a molar concentration ratio of PPFR3 or PPFR4 and the radical-polymerizable fluorine-based monomer in the radical polymerization step may be in a range of 1:10 to 1:10⁸, preferably in a range of 1:10 to 1:10⁶.

In the embodiment of the present invention, by using, as the radical polymerization initiator, PPFR3 or PPFR4 which are easily decomposable stable perfluoroalkyl radicals, even in a case where the polymerization temperature is in the room temperature range, the radical-polymerizable fluorine-based monomer can be stably polymerized at a low concentration, for example, at a concentration of PPFR3 and PPFR4 of 0.00001 mol/L or more and 1 mol/L or less.

In a case where the concentration of PPFR3 and PPFR4 is less than 0.00001 mol/L, the polymerization rate is too slow and the productivity decreases. In addition, in a case of being more than 1 mol/L, it is difficult to control the reaction. It is considered that the concentration of the radical polymerization initiator appropriately changes depending on the scale of the reaction system, but it is considered that the optimum concentration exists within the above-described concentration range.

For example, with regard to the performance of PPFR3 and PPFR4 as an initiator in the room temperature range, more precisely, thermal decomposition half-lives of PPFR3 and PPFR4 at around 20°C in the room temperature range are 26 days and 77 days, respectively, and the decomposition rate ratio thereof is approximately 3. Therefore, with regard to the concentration of PPFR3, in a case where the concentration of PPFR3 is three times that of PPFR4, the performance (trifluoromethyl radical release rate) of PPFR3 as a radical polymerization initiator is equivalent to that of PPFR4.

As in the embodiment of the present invention, in the radical-polymerized fluorine-based polymer obtained by using PPFR3 or PPFR4 as a radical polymerization initiator, a terminal carboxyl group derived from persulfate such as ammonium persulfate, which is used in an aqueous reaction such as emulsion polymerization, is not contained, and the terminal group is the trifluoromethyl group. Therefore, a step of removing the terminal group such as a carboxyl group after the polymerization, as in the related art, is not necessary.

In a case where the radical polymerization step is repeated, after completing one radical polymerization step, a residual solution containing unreacted perfluoroalkyl radicals can be used in a next radical polymerization step. As a result, the radical polymerization of the radical-polymerizable fluorine-based monomer can be carried out efficiently and at low cost.

As described above, in the embodiment of the present invention, by using, as the radical polymerization initiator, PPFR3 or PPFR4 which are easily decomposable stable perfluoroalkyl radicals, the polymerization reaction of radical-polymerizable fluorine-based monomers can be carried out stably even in a case where the polymerization temperature is in the room temperature range and the concentration of PPFR3 and PPFR4 is low.

Although embodiments of the present invention have been described above, such embodiments are presented by way of examples and are not intended to limit the scope of the invention. The embodiments can be implemented in various other forms, and various omissions, replacements, and modifications can be made without departing from the gist of the invention. The embodiments and modifications thereof are included in the scope and gist of the invention, as well as the scope of the invention described in the claims and its equivalents.

### EXAMPLES

Hereinafter, specific examples of the present invention will be described.

### (Overview of Examples 1 to 8)

Example 1: PPFR4 (concentration: 0.4 mol/L, perfluorohexane solution)
Example 2: PPFR4 (concentration: 0.04 mol/L, perfluorohexane solution)
Example 3: PPFR4 (concentration: 0.004 mol/L, perfluorohexane solution)
Example 4: PPFR4 (concentration: 0.0004 mol/L, perfluorohexane solution)
Example 5: PPFR3 (concentration: 0.04 mol/L, perfluorohexane solution)
Example 6: PPFR3 (concentration: 0.004 mol/L, perfluorohexane solution)
Example 7: PPFR3 (concentration: 0.0004 mol/L, perfluorohexane solution)
Example 8: PPFR4 (concentration: 0.04 mol/L, copolymerization of TFE and HFP)

### (Example 1)

1 g of the perfluorohexane solution in which the concentration of PPFR4 was 0.4 mol/L and an inside of a glass reaction vessel (6 mm in diameter and 300 mm in height) including a magnetic stirrer bar were subjected to freeze-and-thaw cycles five times to perform degassing with helium gas. A 1:1 mixed gas of carbon dioxide and tetrafluoroethylene (TFE), which had been obtained by thermal decomposition of dried potassium perfluoropropionate (0.49 g, 2.43 mmol), was introduced into the glass reaction vessel by a trap-to-trap operation.

After further deaerating the inside of the reaction system with helium by performing the freeze-and-thaw cycles two times at the temperature of liquid nitrogen, the reaction system was heat-sealed under vacuum (the heat-sealed position was a position where the length of the reaction vessel was approximately 200 mm and the internal volume was approximately 5 mL). Thereafter, the temperature was returned to room temperature (25°C ± 5°C; the same applies hereinafter), and the resultant was stirred for 1 hour. The produced white solid PTFE was taken out from the reaction vessel, dried in vacuum (0.1 mmHg; the same applies hereinafter) at room temperature for 4 hours, and then analyzed.

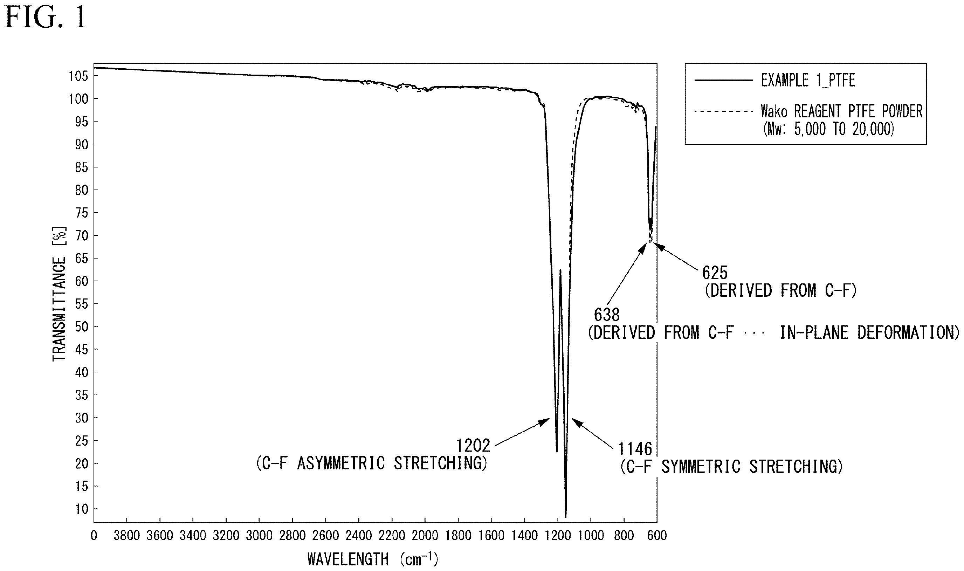

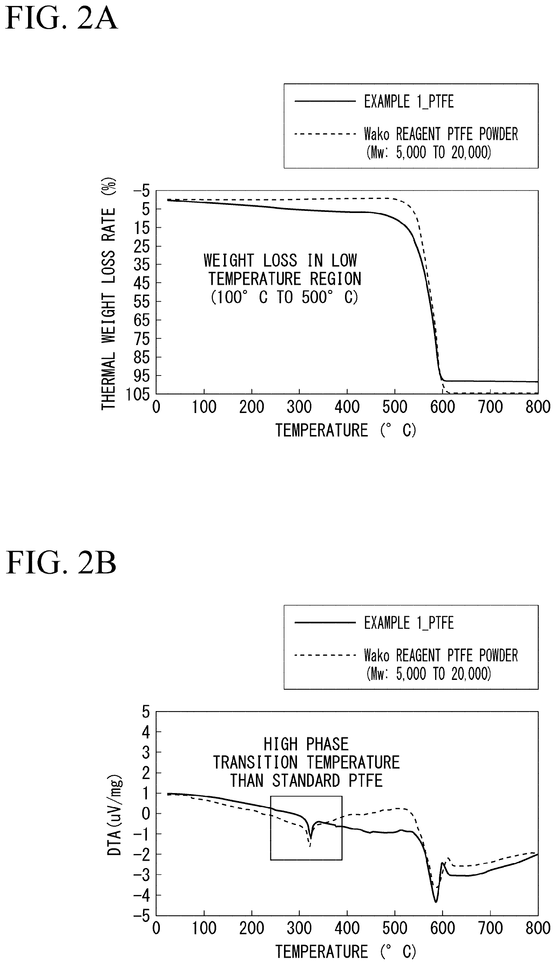

The weight of PTFE after the vacuum drying was 140 mg, and the yield was 57.6% based on the potassium perfluoropropionate used. From a gas chromatography analysis of the perfluorohexane solution recovered in taking out PTFE, it was found that the decomposition rate of PPFR4 was 1.6%. From an analysis of the obtained white solid PTFE with Attenuated Total Reflectance-Fourier Transform Infrared Spectroscopy (ATR-FTIR) (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 1. In addition, FIGS. 2A and 2B show results of Thermogravimetry-Differential Thermal Analysis (TG-DTA; NETZSCH TG-DTA 2000SA type) under a nitrogen stream at a heating rate of 10 °C/min.

In the measurement, the measurement temperature range was set to room temperature to 800°C, the heating rate was set to 10 °C/min, and the atmosphere was nitrogen atmosphere.

According to the results shown in FIGS. 2A and 2B, with regard to the thermogravimetry (TG) and differential thermal Analysis (DTA), a spectrum almost identical to that of the standard PTFE was obtained. In TG, it was observed that the weight loss of the produced PTFE proceeded gently from around 100°C to around 500°C, which indicates that a low-molecular-weight component was contained.

Since the concentration of PPFR4 used in the present example (0.4 mol/L) was too high compared to the concentration of TFE, the concentration of TEF decreased as the polymerization reaction progressed, and termination reaction caused by CF₃ radicals occurred before the chain was sufficiently grown. Therefore, it was considered that the low-molecular-weight component was produced. Meanwhile, in DTA, as compared with the phase transition temperature of the standard PTFE of 322.0°C, the phase transition temperature of the obtained PTFE was 324.2°C, which was shifted to the high temperature side. Therefore, it was considered that the molecular weight of the obtained PTFE was larger than that of the standard PTFE. In DTA at the decomposition end point, the inflection point temperature (hereinafter, referred to as decomposition temperature) of the standard PTFE was 586.1°C, and the inflection point temperature of the obtained PTFE was 586.7°C, which were about the same.

### (Example 2)

A radical polymerization reaction of TFE was carried out under the same reaction operations and reaction conditions as in Example 1, except that 1 g of the perfluorohexane solution in which the concentration of PPFR4 was 0.04 mol/L. However, the reaction time was 3 hours, which was longer than in Example 1. All other conditions were the same as in Example 1. After stirring at room temperature for 3 hours, the produced white solid PTFE was taken out, dried in vacuum at room temperature for 4 hours, and then analyzed.

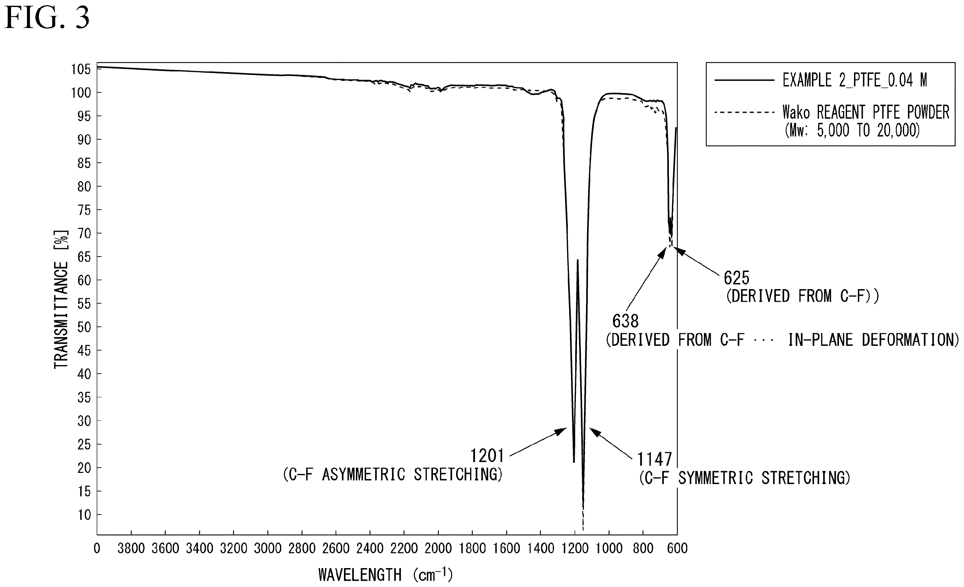

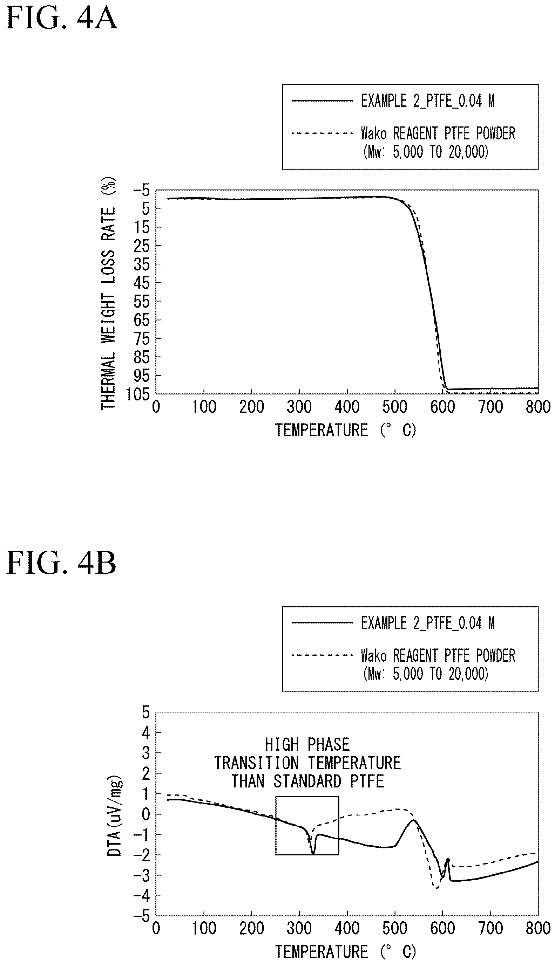

The dry weight of the obtained PTFE was 166 mg, and the yield was 67.0% based on the potassium perfluoropropionate used (0.5 g, 2.48 mmol). From an analysis with ATR-FTIR (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 3. In addition, FIGS. 4A and 4B show results of TG-DTA analysis (NETZSCH TG-DTA 2000SA type) under a nitrogen stream at a heating rate of 10 °C/min.

In the measurement, the measurement temperature range was set to room temperature to 800°C, the heating rate was set to 10 °C/min, and the atmosphere was nitrogen atmosphere.

According to the results shown in FIGS. 4A and 4B, there was no heat weight loss at 100°C to 500°C as found in Example 1, but the 5% weight loss temperature was 525.3°C, which was slightly lower than that of the standard PTFE of 533.6°C. Meanwhile, in DTA, the phase transition temperature was 328.5°C, which was higher than that of the standard PTFE of 322.0°C, and the result was even higher than in Example 1. This is probably because the concentration of PPFR4 was diluted 10-fold from 0.4 mol/L in Example 1 to 0.04 mol/L, which increased the molecular weight of PTFE. In addition, in concert with the phase transition temperature, the decomposition temperature was 600.0°C, which was higher than that of Example 1.

### (Example 3)

A radical polymerization of TFE was carried out using 1 g of the perfluorohexane solution in which the concentration of PPFR4 was 0.004 mol/L. The reaction operations and reaction conditions were the same as in Example 1. However, the reaction time was extended to 3 days (72 hours) at room temperature. After completion of the polymerization reaction, the produced white solid PTFE was taken out, dried in vacuum at room temperature for 4 hours, and then analyzed.

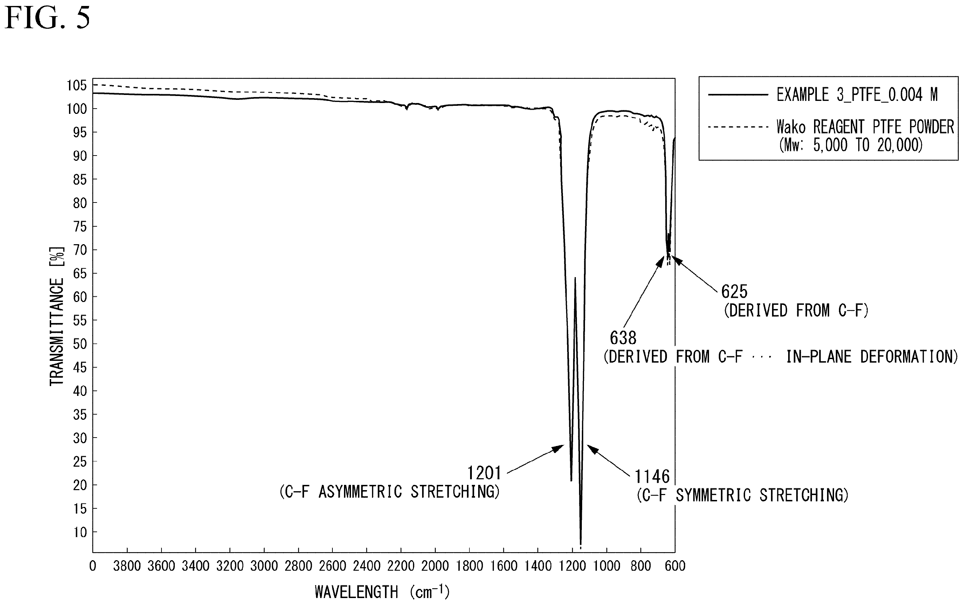

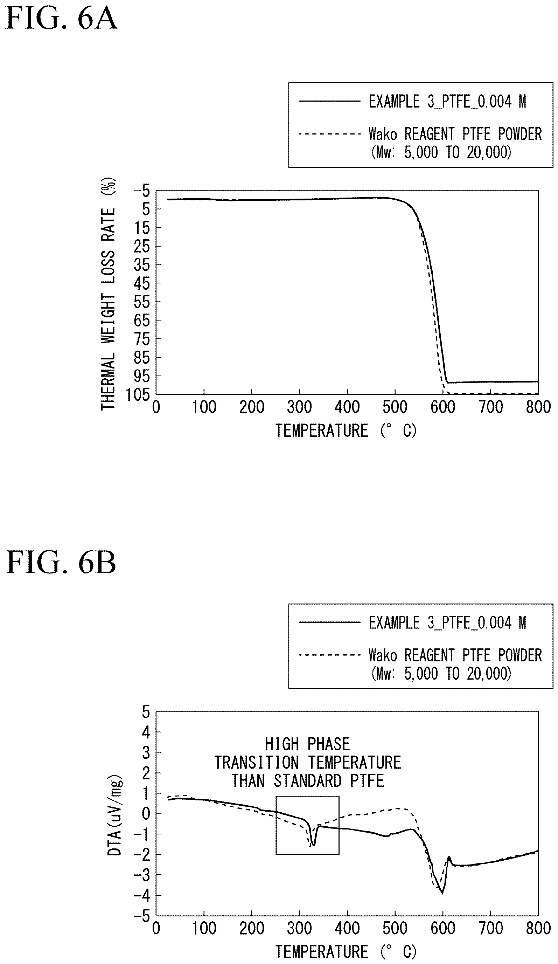

The dry weight of the obtained PTFE was 140.3 mg, and the yield was 56.6% based on the potassium perfluoropropionate used (0.5 g, 2.48 mmol). From an analysis with ATR-FTIR (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 5. In addition, FIGS. 6A and 6B show results of TG-DTA analysis (NETZSCH TG-DTA 2000SA type) under a nitrogen stream at a heating rate of 10 °C/min.

In the measurement, the measurement temperature range was set to room temperature to 800°C, the heating rate was set to 10 °C/min, and the atmosphere was nitrogen atmosphere.

According to the results shown in FIGS. 6A and 6B, the 5% weight loss temperature was 529.4°C, which was higher than that of Example 2 of 525.3°C but was lower than that of the standard PTFE of 533.6°C. Meanwhile, in DTA, the phase transition temperature was 329.2°C, which was higher than those of Example 1 (324.2°C) and Example 2 (328.5°C), and the phase transition temperature gradually increased as the concentration of PPFR4 decreased. It is considered that this is because, corresponding to increasing a degree of dilution of the concentration of PPFR4 to a lower concentration, from 0.4 mol/L to 0.04 mol/L and 0.004 mol/L, the molecular weight of PTFE was higher. The decomposition temperature was 597.6°C, which was about the same as in Example 2 (600.0°C).

### (Example 4)

A radical polymerization of TFE was carried out using 1 g of the perfluorohexane solution in which the concentration of PPFR4 was 0.0004 mol/L. The reaction operations and reaction conditions were the same as in Example 1. However, the reaction time was extended to 1 day (24 hours). After completion of the polymerization reaction, the produced white solid PTFE was taken out, dried in vacuum at room temperature for 4 hours, and then analyzed.

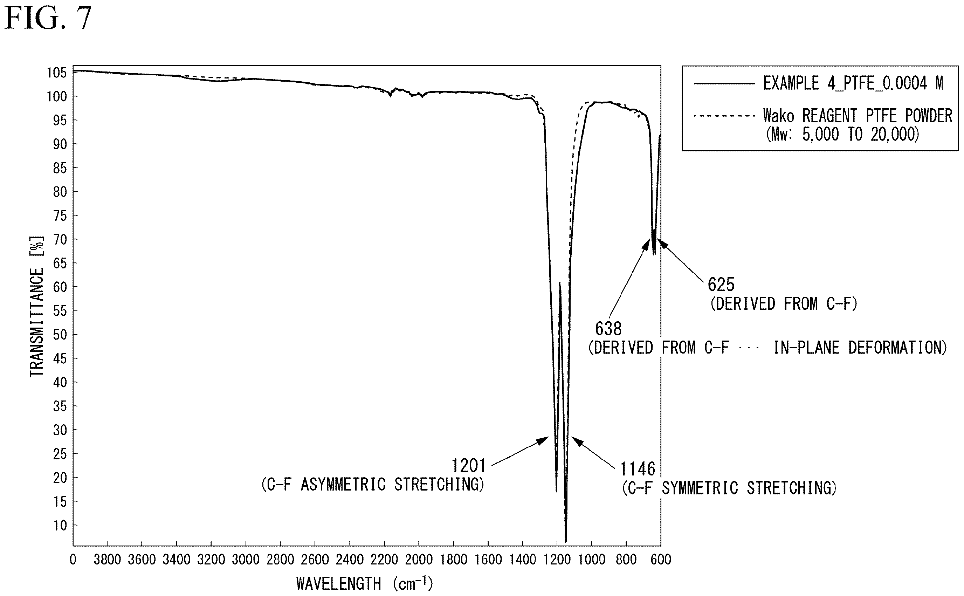

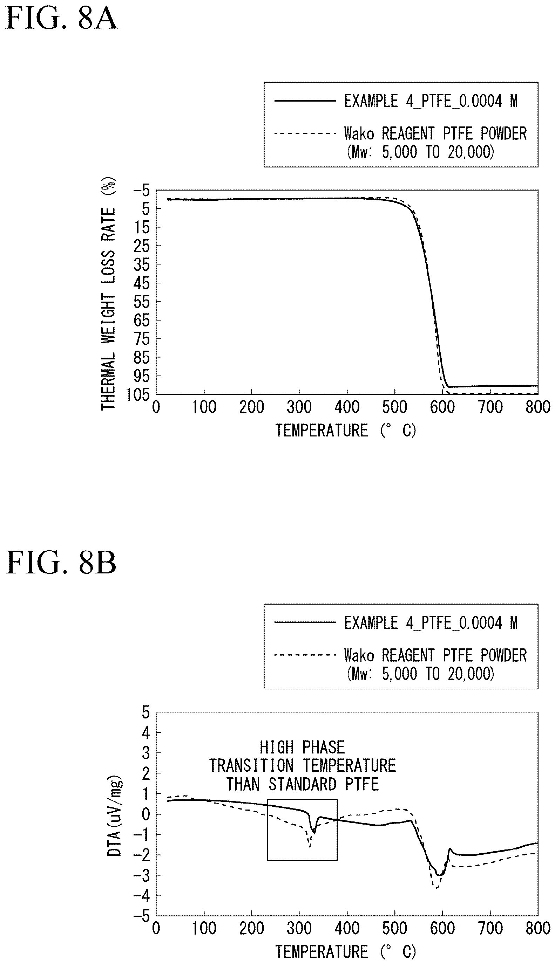

The dry weight of the obtained PTFE was 119 mg, and the yield was 48.0% based on the potassium perfluoropropionate (0.5 g, 2.48 mmol). From an analysis with ATR-FTIR (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 7. In addition, FIGS. 8A and 8B show results of TG-DTA analysis (NETZSCH TG-DTA 2000SA type) under a nitrogen stream at a heating rate of 10°C/min.

In the measurement, the measurement temperature range was set to room temperature to 800°C, the heating rate was set to 10 °C/min, and the atmosphere was nitrogen atmosphere.

According to the results shown in FIGS. 8A and 8B, the 5% weight loss temperature was 529.0°C, which was higher than that of Example 2 of 525.3°C but was lower than that of the standard PTFE of 533.6°C. Meanwhile, in DTA, the phase transition temperature was 332.0°C, and as compared with Example 1 (324.2°C), Example 2 (328.5°C), and Example 3 (329.2°C), it was found that the phase transition temperature gradually increased as the concentration of PPFR4 decreased. The decomposition temperature was 597.5°C, which was about the same value as in Examples 2 and 3.

### (Considerations for Examples 1 to 4 (using PPFR4 as radical polymerization initiator))

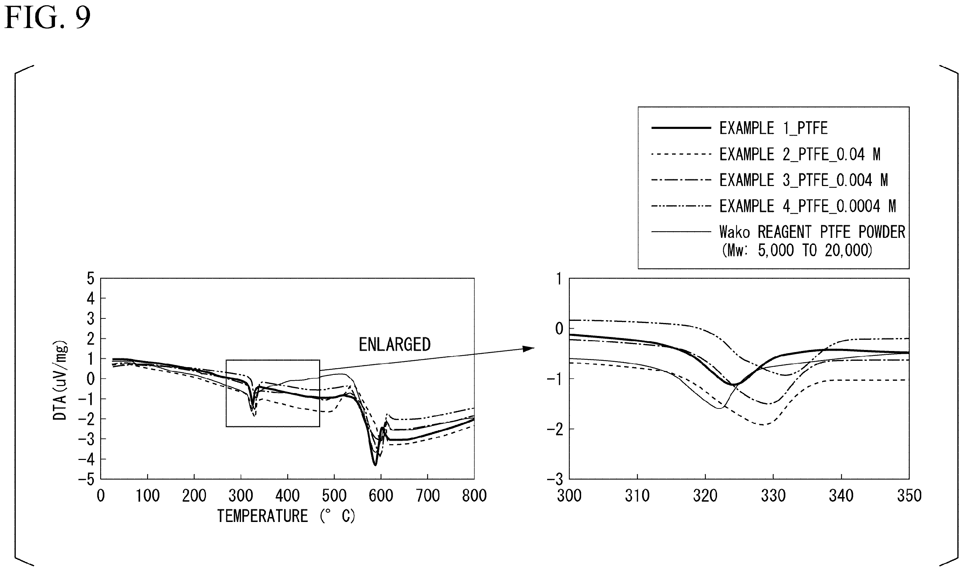

Based on the analysis results of Examples 1 to 4, FIG. 9 and Table 1 summarize and show a relationship between the concentration of PPFR4 and the phase transition temperature in DTA of PTFE obtained by the polymerization (concentration M in the table is mol/L). In the measurement, the measurement temperature range was set to room temperature to 800°C, the heating rate was set to 10 °C/min, and the atmosphere was nitrogen atmosphere.

**[Table 1]**

| 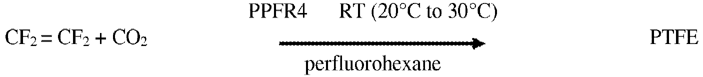 | | | | | | |
|---|---|---|---|---|---|---|
| Example | Concentration of initiator | Reaction time | Yield | 5% weight loss | Phase transition temperature | Decomposition temperature |
| Example 1 | 0.4 M | 1 h | 57.6% | - | 324.2°C | 586.7°C |
| Example 2 | 0.04 M | 3 h | 67.0% | 525.3°C | 328.5°C | 600.0°C |
| Example 3 | 0.004 M | 3 days | 56.6% | 529.4°C | 329.2°C | 597.6°C |
| Example 4 | 0.0004 M | 1 day | 48.0% | 529.0°C | 332.0°C | 597.5°C |
| Comparative Example | Standard PTFE treated with terminal CF3 conversion | | | 533.6°C | 322.0°C | 586.1°C |

According to FIG. 9 and Table 1, it was found that the phase transition temperature tended to increase gradually as the concentration of PPFR4 decreased. That is, the results were 0.4 mol/L (324.2°C) of Example 1, 0.04 mol/L (328.5°C) of Example 2, 0.004 mol/L (329.2°C) of Example 3, and 0.0004 mol/L (332.0°C) of Example 4. From the tendency, it was found that there was a good inverse correlation between the concentration of PPFR4 and the phase transition temperature.

It is considered that this is because, by increasing the degree of dilution of the concentration of PPFR4 (decreasing the concentration thereof) from 0.4 mol/L to 0.04 mol/L, 0.004 mol/L, and 0.0004 mol/L, the concentration of produced trifluoromethyl radicals decreased and the concentration of TFE relatively increased, which promoted the growth reaction. In addition, it is considered that this is because the molecular weight of PTFE increased with the decrease in termination reaction rate due to terminal capping.

Meanwhile, with regard to the decomposition temperature, it was found that the decomposition temperature slightly decreased (586.7°C) in a case where the concentration of PPFR4 in Example 1 was 0.4 mol/L. However, in a case where the concentration was in a range of 0.04 to 0.0004 mol/L, the decomposition temperature was around a value of 600°C, and there was no dependence on the concentration of PPFR4. The decomposition temperature of the standard PTFE was 586.1°C, which was close to the result of Example 1, and in any case of PTFE synthesized using PPFR4, it was found that the thermal stability was improved over that of the standard PTFE. The standard PTFE was a product which had been treated so that the terminal group was CF₃, but since the thermal stability was improved, it was confirmed that the embodiment of the present invention, in which the radical polymerization of TFE was carried out in perfluorohexane using PPFR4, was an excellent method for synthesizing PTFE having a terminal CF₃ group.

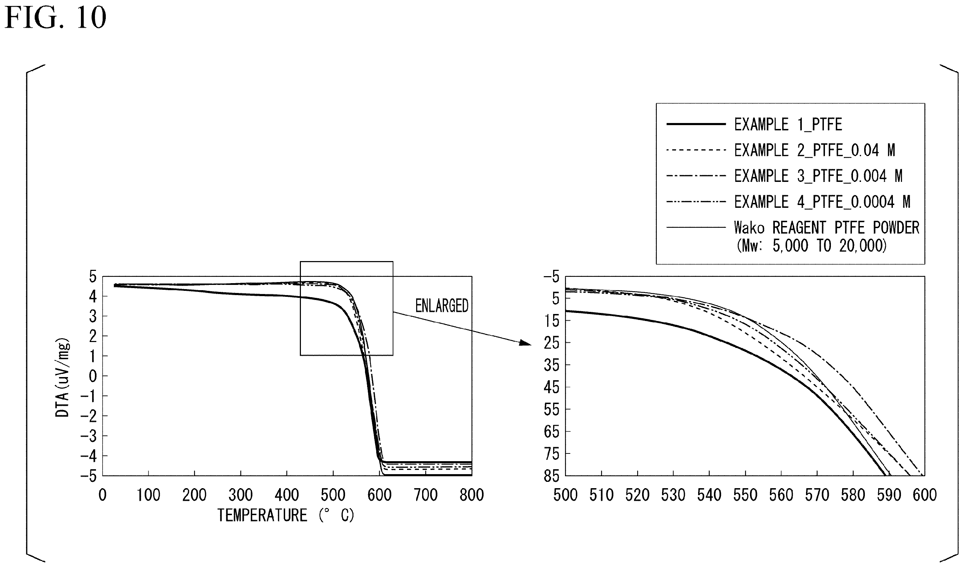

FIG. 10 is a graph showing a relationship between the concentration of PPFR4 of Examples 1 to 4 and heat resistance in comparison from a behavior of TG. In the measurement, the measurement temperature range was set to room temperature to 800°C, the heating rate was set to 10 °C/min, and the atmosphere was nitrogen atmosphere. With regard to the decomposition temperature, there was no significant difference between Examples 2 to 4, but the overall heat resistance performance confirmed from TG was, as can be seen from the enlarged portion of FIG. 10, the highest in a case where the concentration of PPFR4 was 0.004 mol/L. It is considered that there was an optimum concentration of PPFR4 for each reaction system, but approximately the concentration range studied in Examples 1 to 4 could be used for the polymerization reaction of TFE using PPFR4 at the room temperature.

In a case of varying the reaction temperature, the use range of concentration or the optimum concentration may be changed, but such optimization is to be performed for each reaction system, and there is no limitation on the use range of concentration or the optimum concentration of PPFR4, which was obtained from the reaction systems of Examples 1 to 4. Rather, it was demonstrated that, even under mild reaction conditions (decomposition conditions for PPFR4) of room temperature reaction, the effect as a radical polymerization initiator could be fully exhibited at a concentration as low as 0.0004 mol/L.

The inclusion of the low-molecular-weight component in Example 1 may be caused by a high concentration of PPFR4 of 0.4 mol/L, but it may be considered that the batch reaction was peculiar to the reaction system of Examples. It was considered that a constant amount of the low-molecular-weight component was produced in the batch reaction because it was impossible to avoid gradual decrease in the concentration of TFE.

As a result of measuring the amount of PPFR4 after completion of the reaction in Example 1, PPFR4 was decomposed only 1.6% of the charged amount. The result indicates that the charged PPFR4 generated the trifluoromethyl radicals at almost the same rate both at the completion of the reaction and during the initial stage of the reaction. Therefore, as the polymerization reaction of TFE progressed, a ratio of the concentration of trifluoromethyl radicals and the concentration of TFE gradually was changed, which indicates that it was involved in the production of the low-molecular-weight component. In a case of a reaction system in which TFE was added frequently so as to keep the concentration of TFE constant (keep the pressure of TFE constant), it was clarified that the concentration of 0.4 mol/L of PPFR4 in Example 1 was not too high.

In all of Examples 1 to 4, the reason why the 5% weight loss temperature obtained by the TG measurement was lower than that of the standard PTFE is that the reaction system called a batch-type small-scale reaction was greatly involved. In an actual scale or in a reaction system in which TFE is added frequently, it may be considered that the above-described phenomenon is greatly improved.

### (Example 5)

1 g of the perfluorohexane solution in which the concentration of PPFR3 was 0.04 mol/L and an inside of a glass reaction vessel (6 mm in diameter and 300 mm in height) including a magnetic stirrer bar were subjected to freeze-and-thaw cycles five times to perform degassing with helium gas. A 1:1 mixed gas of carbon dioxide and tetrafluoroethylene (TFE), which had been obtained by thermal decomposition of dried potassium perfluoropropionate (0.5 g, 2.48 mmol), was introduced into the glass reaction vessel by a trap-to-trap operation.

After further deaerating the inside of the reaction system with helium by performing the freeze-and-thaw cycles two times at the temperature of liquid nitrogen, the reaction system was heat-sealed under vacuum (the heat-sealed position was a position where the length of the reaction vessel was approximately 200 mm and the internal volume was approximately 5 mL). Thereafter, the temperature was returned to room temperature, and the mixture was stirred for 24 hours. The produced white solid PTFE was taken out from the reaction vessel, dried in vacuum at room temperature for 8 hours, and then analyzed.

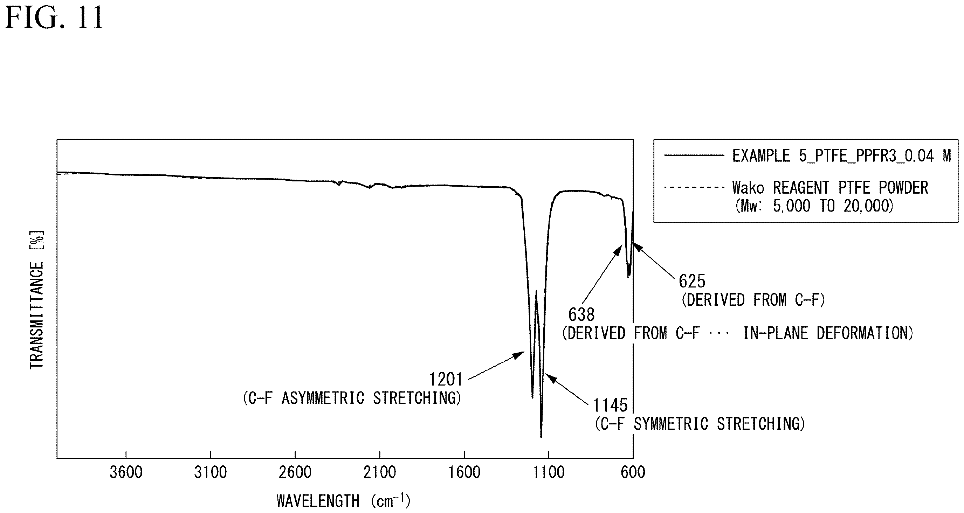

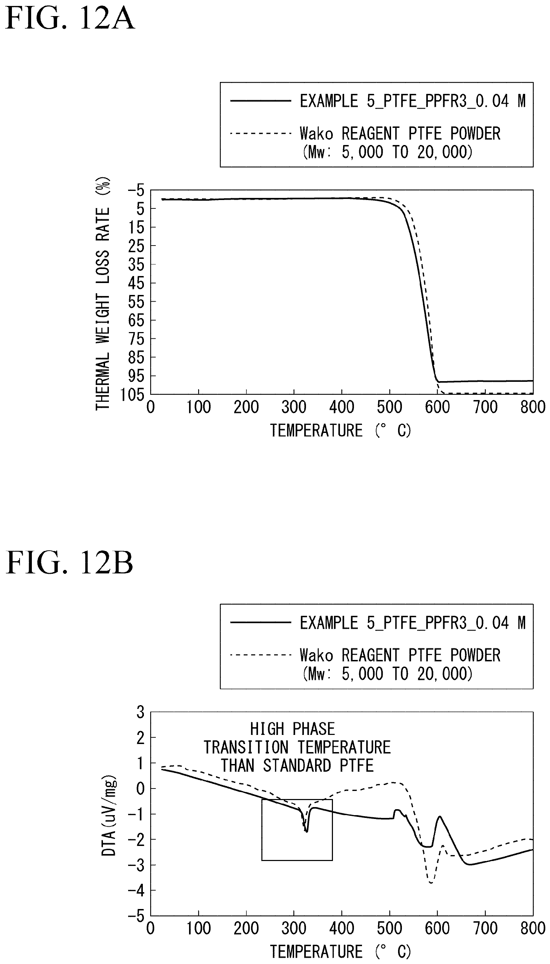

The weight of PTFE after the vacuum drying was 147.0 mg, and the yield was 60.0% based on the potassium perfluoropropionate used. From a gas chromatography analysis of the perfluorohexane solution recovered in taking out PTFE, it was found that the decomposition rate of PPFR3 was 3.5%. From an analysis of the obtained white solid PTFE with Attenuated Total Reflectance (ATR)-FTIR (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 11. In addition, FIGS. 12A and 12B show results of Thermogravimetry-Differential Thermal Analysis (TG-DTA; NETZSCH TG-DTA 2000SA type) under a nitrogen stream at a heating rate of 10°C/min.

In the measurement, the measurement temperature range was set to room temperature to 800°C, the heating rate was set to 10 °C/min, and the atmosphere was nitrogen atmosphere.

According to the results shown in FIGS. 12A and 12B, with regard to the thermogravimetry (TG) and differential thermal Analysis (DTA), a spectrum almost identical to that of the standard PTFE was obtained. In TG, the 5% weight loss temperature of the PTFE obtained by the polymerization was 520.4°C, which was lower than that of the standard PTFE of 533.6°C. The decomposition temperature was 578.3°C, which was also slightly lower than that of the standard PTFE of 586.1°C. Meanwhile, in DTA, as compared with the phase transition temperature of the standard PTFE of 322.0°C, the phase transition temperature of the PTFE obtained by the polymerization was 326.1°C, which was slightly shifted to the high temperature side. Therefore, it was considered that the molecular weight of the obtained PTFE was larger than that of the standard PTFE.

### (Example 6)

A radical polymerization reaction of TFE was carried out under the same reaction operations and reaction conditions as in Example 5, except that 1 g of the perfluorohexane solution in which the concentration of PPFR3 was 0.004 mol/L. However, the reaction time was 1 day (24 hours), which was longer than in Example 1. All other conditions were the same as in Example 5. After stirring at room temperature for 24 hours, the produced white solid PTFE was taken out, dried in vacuum at room temperature for 8 hours, and then analyzed.

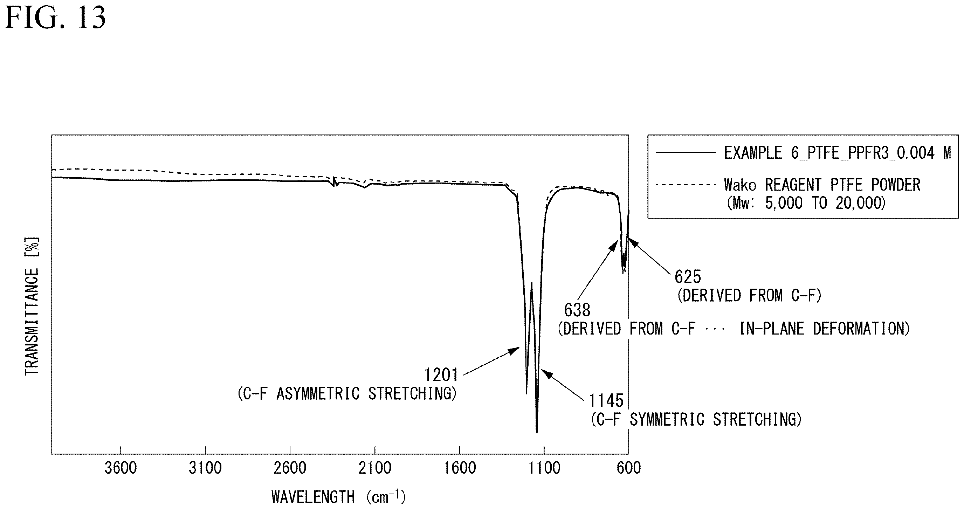

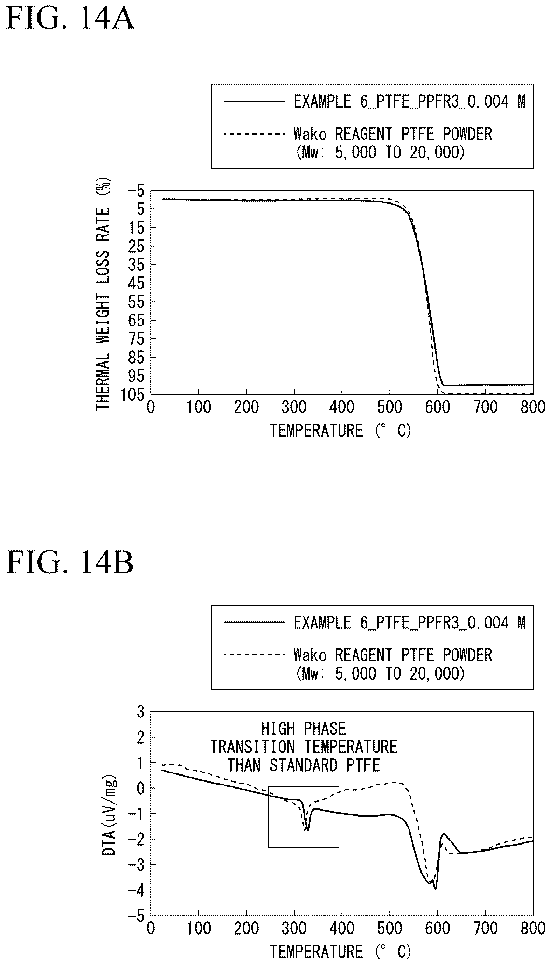

The dry weight of the obtained PTFE was 129.4 mg, and the yield was 52.2% based on the potassium perfluoropropionate used (0.5 g, 2.48 mmol). From an analysis with ATR-FTIR (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 13. In addition, FIGS. 14A and 14B show results of TG-DTA analysis (NETZSCH TG-DTA 2000SA type) under a nitrogen stream at a heating rate of 10 °C/min.

In the measurement, the measurement temperature range was set to room temperature to 800°C, the heating rate was set to 10 °C/min, and the atmosphere was nitrogen atmosphere.

According to the results shown in FIGS. 14A and 14B, with regard to the thermogravimetry (TG) and differential thermal Analysis (DTA), a spectrum almost identical to that of the standard PTFE was obtained. In TG, the weight loss temperature of the produced PTFE was 528.5°C, which was slightly lower than that of the standard PTFE of 533.6°C. Meanwhile, the decomposition temperature was 596.7°C, which was considerably higher than that of the standard PTFE of 586.1 °C, and it was confirmed that the overall thermal stability was higher than that of the standard PTFE. In addition, in DTA, as compared with the phase transition temperature of the standard PTFE of 322.0°C, the phase transition temperature of the PTFE obtained by the polymerization was 330.6°C, which was shifted to the high temperature side. Therefore, it was considered that the molecular weight of the PTFE obtained by the polymerization was larger than that of the standard PTFE.

### (Example 7)

A radical polymerization of TFE was carried out using 1 g of the perfluorohexane solution in which the concentration of PPFR3 was 0.0004 mol/L. The reaction operations and reaction conditions were the same as in Example 5. However, the reaction time was extended to 3 days (72 hours). After completion of the polymerization reaction, the produced white solid PTFE was taken out, dried in vacuum at room temperature for 8 hours, and then analyzed.

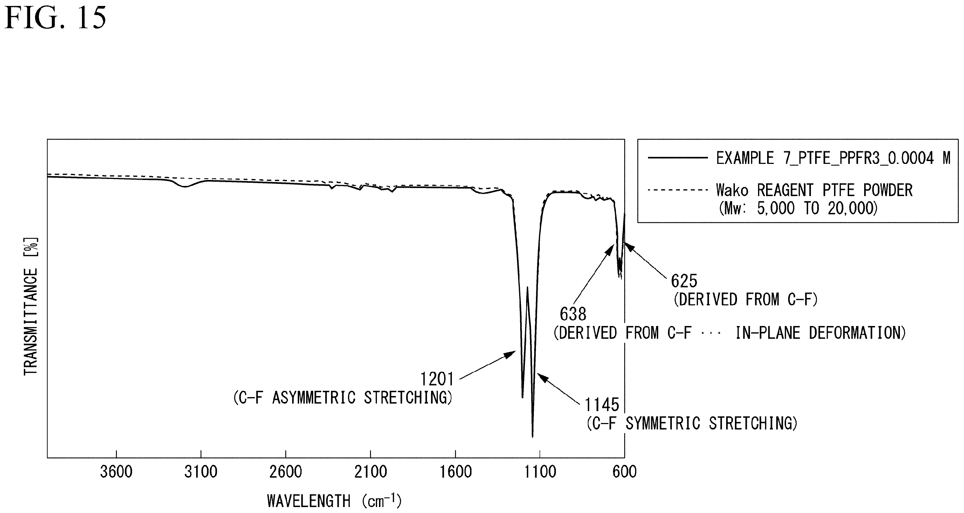

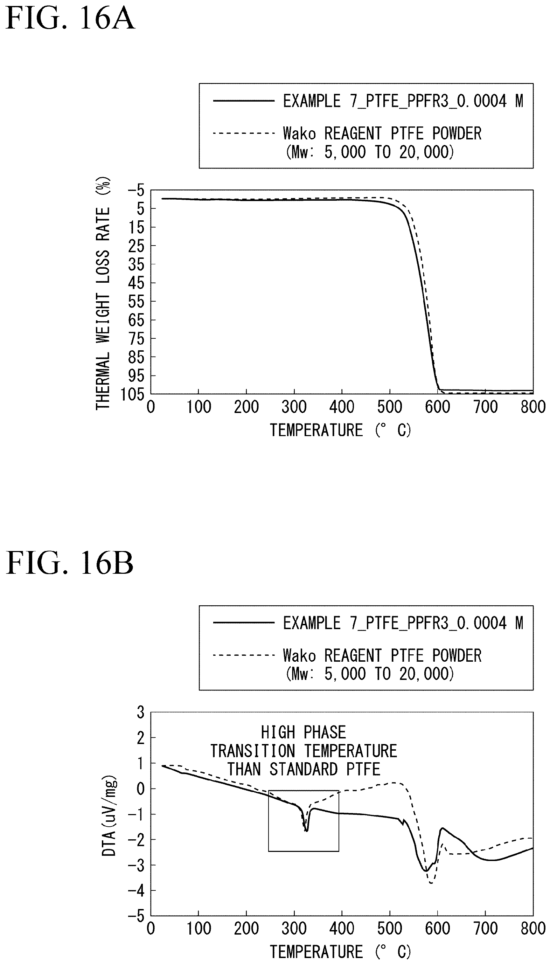

The dry weight of the obtained PTFE was 80.4 mg, and the yield was 32.4% based on the potassium perfluoropropionate (0.5 g, 2.48 mmol). From an analysis with ATR-FTIR (BRUKER TENSOR 27 type), a spectrum identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 15. In addition, FIGS. 16A and 16B show results of TG-DTA analysis (NETZSCH TG-DTA 2000SA type) under a nitrogen stream at a heating rate of 10°C/min.

In the measurement, the measurement temperature range was set to room temperature to 800°C, the heating rate was set to 10 °C/min, and the atmosphere was nitrogen atmosphere.

According to the results shown in FIGS. 16A and 16B, with regard to TG and DTA, a spectrum almost identical to that of the standard PTFE was obtained, but in TG, the 5% weight loss temperature of the obtained PTFE was 518.4°C, which was considerably lower than that of the standard PTFE of 533.6°C. The weight loss was observed from around 100°C, and it is considered that a low-molecular-weight component could not be sufficiently removed by drying at room temperature under reduced pressure. Meanwhile, the decomposition temperature was 573.0°C, which was considerably lower than that of the standard PTFE of 586.1°C, and it was confirmed that the thermal stability was reduced from that of the standard PTFE. In DTA, as compared with the phase transition temperature of the standard PTFE of 322.0°C, the phase transition temperature of the obtained PTFE was 325.4°C, which was slightly shifted to the high temperature side. Therefore, it was considered that the molecular weight of the obtained PTFE was larger than that of the standard PTFE.

### (Considerations for Examples 5 to 7 (using PPFR3 as radical polymerization initiator))

Based on the analysis results of Examples 5 to 7, Table 2 summarizes and shows a relationship between the concentration of PPFR3 and properties of the PTFE obtained by the polymerization (concentration M in the table is mol/L).

**[Table 2]**

| 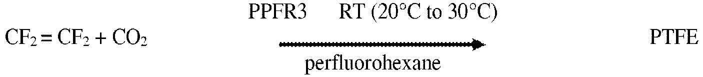 | | | | | | |
|---|---|---|---|---|---|---|
| Example | Concentration of initiator | Reaction time | Yield | 5% weight loss | Phase transition temperature | Decomposition temperature |
| Example 5 | 0.04 M | 1 day | 60.0% | 520.4°C | 326.1 °C | 578.3°C |
| Example 6 | 0.004 M | 1 day | 52.2% | 528.5°C | 330.6°C | 596.7°C |
| Example 7 | 0.0004 M | 3 days | 32.4% | 518.4°C | 325.4°C | 573.0°C |
| Comparative Example | Standard PTFE treated with terminal CF3 conversion | | | 533.6°C | 322.0°C | 586.1°C |

According to Table 2, both the phase transition temperature and the decomposition temperature of the obtained PTFE were the highest in a case where the concentration of PPFR3 was 0.004 mol/L, and tended to be slightly lower at concentrations around that. However, it is not clear why a constant relationship as in PPFR4 is not observed. In PPFR3, unlike PPFR4, PPFR3 itself may interact with intermediate radicals, which may underlie the phenomenon.

With regard to the phase transition temperature, as compared with the standard PTFE (322.0°C), the values were high in all concentration regions of PPFR3 of Examples 5 to 7 (326.1 °C, 330.6°C, and 325.4°C, respectively), and it is considered that the molecular weight of the obtained PTFE was higher than that of the standard PTFE.

The decomposition temperature was 596.7°C in Example 6, which was higher than that of the standard PTFE of 586.1°C by approximately 10°C, but at concentrations around that in Example 5 and Example 7, the decomposition temperatures were 578.3°C (Example 5) and 573.0°C (Example 7), which were lower than the value of the standard PTFE. Both PPFR4 and PPFR3 have a polymerization mechanism that initiate or terminate the polymerization of TFE by releasing trifluoromethyl radicals. It is difficult to believe that the generation rate of trifluoromethyl radicals causes the differences, and it is reasonable to believe that structural factors between PPFR4 and PPFR3 attribute the differences. However, at the present moment, it is only conceivable that the above-described radical intermediate and PPFR4 or PPFR3 may interact differently with each other.

The reason why the 5% weight loss temperature in TG was lower than that of the standard PTFE is not a feature of PPFR3, but is due to the common cause with PPFR4 (Examples 1 to 4) (due to that the batch type had small scale). It is noted that this can be improved by controlling the ratio of the concentration of the radical polymerization initiator and the concentration of TFE, such as carrying out the reaction while supplying TFE.

### (Example 8)

1 g of the perfluorohexane solution in which the concentration of PPFR4 was 0.04 mol/L and an inside of a glass reaction vessel (6 mm in diameter and 300 mm in height) including a magnetic stirrer bar were subjected to freeze-and-thaw cycles five times to perform degassing with helium gas. A 1:1 mixed gas of carbon dioxide and tetrafluoroethylene (TFE), which had been obtained by thermal decomposition of dried potassium perfluoropropionate (0.5 g, 2.48 mmol), was introduced into the glass reaction vessel by a trap-to-trap operation. Furthermore, a 1:1 mixed gas of carbon dioxide and hexafluoropropylene (HFP), which had been obtained by thermal decomposition of dried potassium perfluoropropionate (252 mg, 1.0 mmol), was introduced thereinto by a trap-to-trap operation.

After further deaerating the inside of the reaction system with helium by performing the freeze-and-thaw cycles two times at the temperature of liquid nitrogen, the reaction system was heat-sealed under vacuum (the heat-sealed position was a position where the length of the reaction vessel was approximately 200 mm and the internal volume was approximately 5 mL). Thereafter, the temperature was returned to room temperature, and the mixture was stirred for 7 days. The produced white solid tetrafluoroethylene-hexafluoropropylene copolymer (FEP) was taken out from the reaction vessel, dried in vacuum at room temperature for 1 hour, and then analyzed.

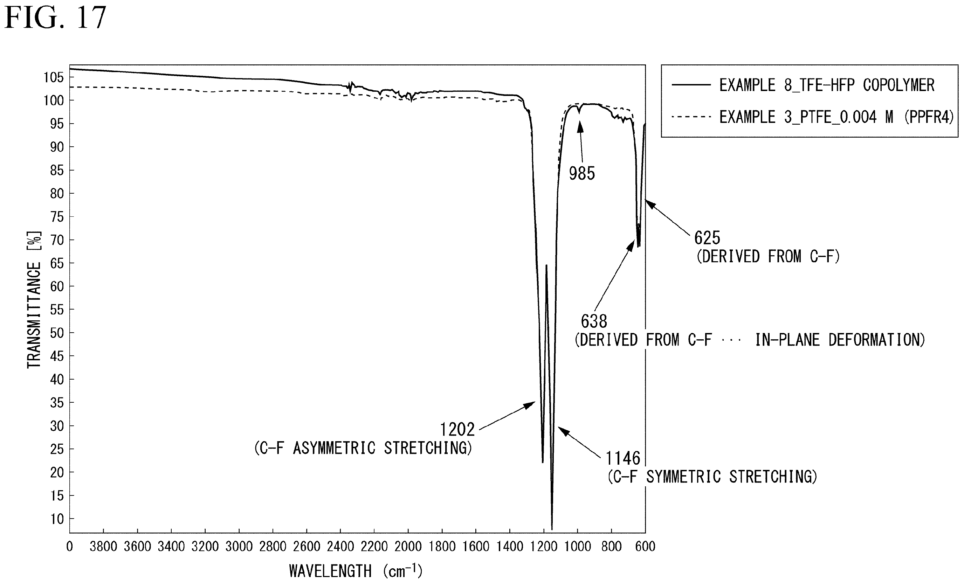

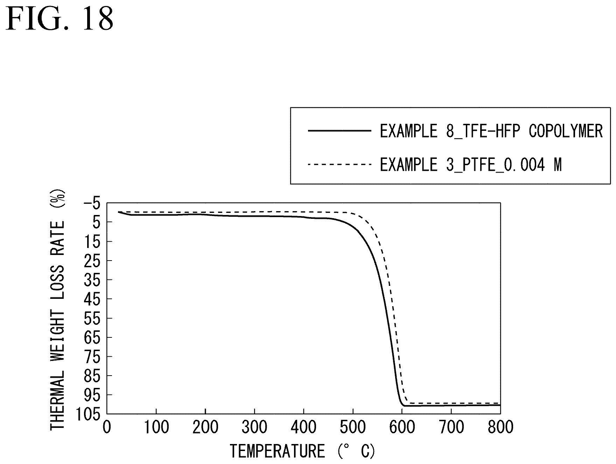

The weight of the FEP after the vacuum drying was 210 mg, and the yield was 52.8% in a case where the total amount of the potassium perfluoropropionate and potassium perfluorobutyrate used was set to 100 as being completely reacted. With the obtained white solid, from an analysis with ATR-FTIR (BRUKER TENSOR 27 type), a spectrum almost identical to that of standard PTFE (manufactured by FUJIFILM Wako Pure Chemical Corporation; terminal-treated CF₃(CF₂CF₂)nCF₃; molecular weight: 5,000 to 20,000) was obtained. The results are shown in FIG. 17. As a difference from the standard PTFE, new absorption was observed at 985 cm⁻¹, in which the absorption intensity was very small. In addition, FIG. 18 shows results of Thermogravimetry-Differential Thermal Analysis (TG-DTA; NETZSCH TG-DTA 2000SA type) under a nitrogen stream at a heating rate of 10 °C/min.

In the measurement, the measurement temperature range was set to room temperature to 800°C, the heating rate was set to 10 °C/min, and the atmosphere was nitrogen atmosphere.

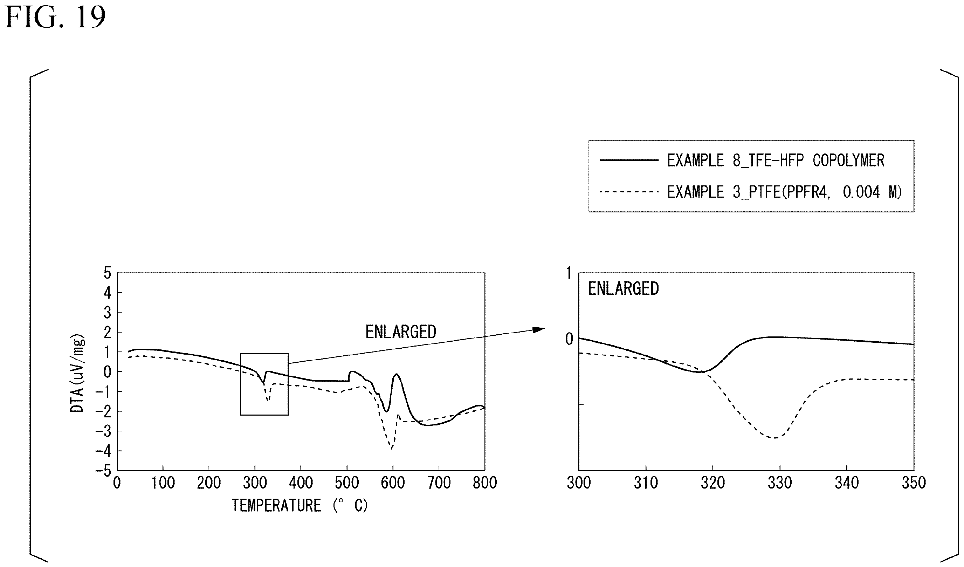

According to the results shown in FIG. 18, TG was considerably shifted to the low temperature side compared to the PTFE obtained by the polymerization of TFE alone (in FIG. 18, Example 3 with a concentration of PPFR4 of 0.004 mol/L is mentioned for comparison). In addition, the decomposition temperature in DTA, shown in FIG. 19, was 586.4°C, which was considerably lower than that of the case of TFE homopolymerization (600°C in Example 2, 597.6°C in Example 3, and 597.5°C in Example 4).

The FEP obtained by copolymerizing TFE and HFP was a white solid having exactly the same shape as PTFE at the time when the FEP was taken out from the reaction vessel, which was indistinguishable in appearance. However, in a case of being dried in vacuum at room temperature, the rod-like morphology turned into powder. In the case of the PTFE obtained by the polymerization of TFE alone, long fibrous solids grew densely in the glass tube of the reaction vessel, resulting in formation of a dense rod-like solid, and the shape did not collapse during the vacuum drying. Such morphological change during the vacuum drying proved that the obtained white solid was FEP.

In addition, even with such a remarkable change in morphology, from an analysis with ATR-FTIR (BRUKER TENSOR 27 type), a spectrum almost identical to that of standard PTFE (manufactured by FUJIFILM Wako Pure Chemical Corporation; terminal-treated CF₃(CF₂CF₂)nCF₃; molecular weight: 5,000 to 20,000) was obtained. It is considered that, since both PTFE and FEP were compounds belonging to perfluoroalkane and had similar structures, the changes in FTIR were small. Also in the IR spectrum of FEP obtained in this example, the difference from the IR spectrum of PTFE was limited to a very small absorption peak observed at the wavelength of 985 cm-¹.

In addition, it can be seen from the TG results in FIG. 18 that the obtained FEP had lower thermal stability than the standard PTFE due to steric repulsion by the substitution of the CF₃ group on the polymer main chain, which is a general characteristic of FEP. While the shift of TG to the low temperature side indicated a decrease in thermal stability, the thermal decomposition temperature was about the same as 586.1 °C of the standard PTFE treated with a terminal CF₃ group. It suggested that the FEP obtained here had a high degree of terminal CF₃ conversion, which was appropriate from the viewpoint of the reaction mechanism of polymerization initiation and polymerization termination by trifluoromethyl radicals. The shift of TG to the low temperature side and the above-described morphological change during the vacuum drying indicated that the FEP which is a copolymer of TFE and HFP was obtained.

In each of Examples 1 to 8 described above, the reaction system was such that TFE and equimolar carbon dioxide (CO₂) coexisted, and this is because the production process of TFE is dependent on a synthesis method which accompanies the decarboxylation reaction. Although it is possible to remove CO₂ after the TFE synthesis, an equimolar mixed gas of TFE and CO₂ has the great advantage that the polymerization reaction can be stably carried out. For this reason, a method of using the 1:1 mixed gas of TFE and CO₂ as it is for the reaction without removing CO₂ was adopted. It should be commented here that the presence of CO₂ is not essential for the polymerization reaction, as it is known that CO₂ only serves as a diluent for TFE and has no essential effect on the polymerization reaction of TFE.

### INDUSTRIAL APPLICABILITY

In the present invention, since the radical polymerization can be stably carried out in a normal temperature environment using a low-concentration radical polymerization initiator without using PFOA, which has been pointed out as an environmental problem, the method can be widely applied to the use of producing a radical-polymerized fluorine-based polymer by radical-polymerizing a radical-polymerizable fluorine-based monomer. In addition, since the terminal group is a trifluoromethyl group, it is possible to provide an economically excellent method for producing a radical-polymerized fluorine-based polymer, that does not require a step of converting a terminal carboxyl group into the trifluoromethyl group, which is a problem in emulsion polymerization, and can avoid a huge treatment cost of waste water.

## Claims

1. A radical polymerization method comprising:
subjecting a radical-polymerizable fluorine-based monomer to a radical polymerization using a polymerization initiator which generates perfluoroalkyl radicals by thermal decomposition, to obtain a radical-polymerized fluorine-based polymer,
wherein the polymerization initiator includes at least one of perfluoro-3-ethyl-2,2,4-trimethyl-3-pentyl or perfluoro-2,2,4-trimethyl-3-isopropyl-3-pentyl.

2. The radical polymerization method according to Claim 1,
wherein the radical-polymerizable fluorine-based monomer is a fluorine-based monomer or a perfluoromonomer.

3. The radical polymerization method according to Claim 1 or 2,
wherein the polymerization initiator is used by dissolving the radical-polymerizable fluorine-based monomer in a polymerization solvent.

4. The radical polymerization method according to any one of Claims 1 to 3,
wherein the radical polymerization is carried out by copolymerizing two or more kinds of radical-polymerizable fluorine-based monomers having structures different from each other.

5. The radical polymerization method according to any one of Claims 1 to 4,
wherein the radical polymerization is carried out in a temperature range of 10°C or higher and lower than 90°C.

6. A method for producing a radical-polymerized fluorine-based polymer using the radical polymerization method according to any one of Claims 1 to 5, the method comprising:
a reaction solution-forming step of dissolving the polymerization initiator in a polymerization solvent to obtain a reaction solution; and
a radical polymerization step of supplying the radical-polymerizable fluorine-based monomer to the reaction solution to obtain a radical-polymerized fluorine-based polymer.

7. The method for producing a radical-polymerized fluorine-based polymer according to Claim 6,
wherein the radical-polymerizable fluorine-based monomer is a perfluoromonomer, and
the radical-polymerized fluorine-based polymer is a perfluoropolymer.

8. The method for producing a radical-polymerized fluorine-based polymer according to Claim 7,
wherein a terminal group of the perfluoropolymer is a trifluoromethyl group.

9. The method for producing a radical-polymerized fluorine-based polymer according to Claim 7 or 8,
wherein the perfluoromonomer is tetrafluoroethylene, and
the perfluoropolymer is polytetrafluoroethylene.

10. The method for producing a radical-polymerized fluorine-based polymer according to any one of Claims 6 to 9,
wherein the radical polymerization step is carried out in a temperature range of 10°C or higher and 50°C or lower.

11. The method for producing a radical-polymerized fluorine-based polymer according to any one of Claims 6 to 10,
wherein a molar concentration ratio of the polymerization initiator and the radical-polymerizable fluorine-based monomer in the radical polymerization step is in a range of 1:10 to 1:10⁸.

12. The method for producing a radical-polymerized fluorine-based polymer according to any one of Claims 6 to 11,
wherein a concentration of the polymerization initiator contained in the reaction solution is in a range of 0.00001 mol/L or more and 1 mol/L or less.

13. The method for producing a radical-polymerized fluorine-based polymer according to any one of Claims 6 to 12,
wherein the radical polymerization step is repeated, and
after completing one radical polymerization step, a residual solution containing unreacted perfluoroalkyl radicals is used in a next radical polymerization step.
